(19) Europäisches Patentamt
European Patent Office
Office européen des brevets

(11) **EP 2 110 938 B1**

(12) **EUROPÄISCHE PATENTSCHRIFT**

(45) Veröffentlichungstag und Bekanntmachung des Hinweises auf die Patenterteilung:
**29.08.2018   Patentblatt 2018/35**

(51) Int Cl.:
*H02M 1/00* *(2006.01)*          *H02M 3/335* *(2006.01)*

(21) Anmeldenummer: **08007335.6**

(22) Anmeldetag: **14.04.2008**

(54) **Primärseitige Steuerschaltung in einem Schaltnetzteil mit Transformator ohne Hilfswicklung mit einer Regelung basierend auf der sekundärseitigen Stromflusszeitdauer**

Control circuit on the primary side of an electronic power converter having a transformer without auxiliary winding with a regulation based on the secondary side current flow duration

Circuit de commande primaire pour un convertisseur électronique de puissance comportant un transformateur sans enroulement auxiliaire avec un réglage basé sur la durée de continuité de courant du côté secondaire

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(43) Veröffentlichungstag der Anmeldung:
**21.10.2009   Patentblatt 2009/43**

(73) Patentinhaber: **Power Systems Technologies GmbH**
**48346 Ostbevern (DE)**

(72) Erfinder: **Schröder, Ralf, genannt Berghegger**
**49219 Glandorf (DE)**

(74) Vertreter: **Grünecker Patent- und Rechtsanwälte PartG mbB**
**Leopoldstraße 4**
**80802 München (DE)**

(56) Entgegenhaltungen:
**WO-A-99/30409     US-A1- 2007 103 943**

**Beschreibung**

**FELD DER ERFINDUNG**

Die vorliegende Erfindung bezieht sich auf eine Steuerschaltung für ein primär gesteuertes Schaltnetzteil, das einen primärseitigen Schalter und einen Übertrager aufweist. Die vorliegende Erfindung bezieht sich außerdem auf ein zugehöriges Schaltnetzteil.

**HINTERGRUND DER ERFINDUNG**

Üblicherweise verwenden bekannte Schaltnetzteile einen Leistungstransistorschalter, um einen gepulsten Stromfluss an ein Netzwerk von induktiven und kapazitiven Energiespeicherelementen zu speisen, welche den geschalteten Strompuls in eine geregelte Gleichspannung umwandeln. Schaltnetzteile können Ausgangsspannungen liefern, die größer, kleiner, gleich oder von entgegengesetzter Polarität wie die ungeregelte Eingangsspannung sind, je nach Betriebsmodus des Schaltnetzteils. Häufig werden Schaltnetzteile in Leistungsversorgungsschaltungen eingesetzt. Dabei sollten derartige Schaltnetzteile Eingangsspannungen im Bereich von 85 V bis 270 V Wechselspannung akzeptieren und auf diese Weise bei unterschiedlichen Netzversorgungen überall auf der Welt ohne Modifikationen oder Schalter arbeiten können. Darüber hinaus muss die Ausgangsspannung ausreichend und genau geregelt werden, um Schäden an der Last einerseits und unnötigen Leistungsverbrauch andererseits zu vermeiden. Schließlich müssen heutige Schaltnetzteile extrem kostengünstig und von ihren geometrischen Abmessungen her weitestgehend minimiert ausgeführt werden.

Die Ausgangsspannung bekannter primärgeschalteter Schaltnetzteile wird üblicherweise mittels eines Rückkopplungssignals geregelt, das die Ausgangsspannung und/oder den Ausgangsstrom abbildet. Um die Ausgangsspannung als Regelgröße verwenden zu können, muss die Rückkopplung eines entsprechenden Signals von der Sekundärseite zum Regelkreis auf die Primärseite erfolgen. Dieses Rückkopplungssignal wird verwendet, um den Arbeitszyklus des schaltenden Leistungstransistors zu steuern. Um ein geeignetes Rückkopplungssignal bereitzustellen, existieren gegenwärtig verschiedene Ansätze. Beispielsweise kann eine primärseitige Hilfswicklung vorgesehen sein, die während der Ausschaltzeit des primärseitigen Schalters ein Rückkopplungssignal erzeugt, das ein Abbild der Ausgangsspannung liefert. Alternativ kann aber auch unmittelbar die Ausgangsspannung über einen Optokoppler zurückgekoppelt werden. Alternativ können auch andere Signalübertrager verwendet werden, um die Ausgangsspannung auf der Sekundärseite direkt zur Steuerschaltung auf der Primärseite zu signalisieren.

Diese Rückkopplungsvarianten haben den Nachteil, dass sie entweder eine Hilfswicklung, einen Optokoppler oder einen Signalübertrager verwenden müssen. Beispielsweise, im Falle einer Hilfswicklung im Transformator ist dieser vergleichsweise komplex und teuer. Dokument US 2007/0103943 A1 offenbart ein primärgeschaltetes Schaltnetzteil.

**ZUSAMMENFASSUNG DER ERFINDUNG**

Die Aufgabe, die der vorliegenden Erfindung zugrunde liegt, besteht somit darin, eine möglichst einfache und kostengünstige Steuerschaltung für ein Schaltnetzteil anzugeben, die es erlaubt die Ausgangsspannung eines Schaltnetzteils zu regeln ohne eine direkte Rückkopplung zwischen Sekundär- und Primärseite aufzuweisen.

Diese Aufgabe wird durch den Gegenstand des unabhängigen Patentanspruchs 1 gelöst. Vorteilhafte Weiterbildungen der vorliegenden Erfindung sind Gegenstand der abhängigen Patentansprüche.

Die vorliegende Erfindung basiert auf der Idee, dass die sekundärseitige Stromflusszeitdauer als Regelgröße verwendet werden kann, anstelle der eigentlichen Ausgangsspannung, um damit dann den primärseitigen Schalter zu steuern. Da die sekundärseitige Stromflusszeitdauer indirekt auf der Primärseite ermittelt werden kann, ist keinerlei direkte Rückkopplung zwischen der Ausgangsspannung auf der Sekundärseite und der Steuerschaltung auf der Primärseite notwendig.

Je nach Auslegung der Steuerschaltung kann somit der Ausschaltzeitpunkt und/oder der Einschaltzeitpunkt des primärseitigen Schalters basierend auf der sekundärseitigen Stromflusszeitdauer bestimmt werden.

Die sekundärseitige Stromflusszeitdauer muss auf der Primärseite ermittelt werden, wobei der Beginn dieser Stromflusszeitdauer auf der Sekundärseite durch den Ausschaltzeitpunkt des primärseitigen Schalters definiert wird, da erst zu diesem Zeitpunkt der Strom durch die sekundärseitigen Wicklung zu fließen beginnt.

Das Ende der Stromflusszeitdauer, in welcher ein Strom durch die Sekundärseite fließt, kann ermittelt werden indem die Spannung an der Primärwicklung beobachtet wird. Die Primär- und Sekundärwicklungen bei einem Transformator sind magnetisch gekoppelt, und die Spannungen an den beiden Wicklungen haben, wenn ideale Bauteile angenommen werden, einen identischen Verlauf. Wenn der sekundärseitige Strom nicht mehr fließt gibt es auch keine Spannung mehr an der Sekundärwicklung und somit auch nicht an der Primärwicklung. Folglich kann das Ende des sekundärseitigen Stromflusses anhand des Nulldurchgangs der Spannung an der Primärspule ermittelt werden.

Die Spannung an der Primärspule ist verhältnismäßig hoch, weshalb diese Spannung nicht direkt an der Primärspule gemessen wird, sondern am Steuereingang des Schalters, an dem diese Spannung auch anliegt. Die hohe Spannung der Primärwicklung liegt an dem Kollektoreingang des Bipolartransistors (kann beispielsweise als Schalter verwendet werden). Aufgrund der hohen Spannung, ist über die parisitäre Kapazität zwischen dem Kollektoreingang und dem Basiseingang (Steuereingang) des Bipolartransistors eine ausreichend hohe Spannung am Basiseingang abgreifbar, um zu ermitteln ob die Spannung an der Primärspule abgeklungen ist, d.h. ein Nulldurchgang der Spannung erfolgt.

Alternativ können auch parasitäre Kapazitäten zwischen Leiterbahnen verwendet werden, um die Spannung an der Primärwicklung abzugreifen.

Gemäß einer vorteilhaften Ausführungsform wird der primärseitige Schalter hochohmig im ausgeschalteten Zustand gehalten, damit sich die Spannung an der Primärwicklung besser auf die Spannung am Basiseingang des Bipolartransistors überträgt.

Der Steuerausgang der Steuerschaltung, der zum Ansteuern des primärseitigen Schalters verwendet wird, ist mit dem Steuereingang des Schalters verbunden. Am Steuereingang des Schalters wird auch die oben erwähnte Spannung abgegriffen, die somit über den Steuerausgang an die Steuerschaltung zurückgeführt wird. Der Steuerausgang der Steuerschaltung muss somit in beiden Richtungen arbeiten können. Es kann allerdings auch ein zusätzlicher Anschluss an der Steuerschaltung vorgesehen werden, um die Spannung am Basiseingang des Bipolartransistors zurückzuführen, die mit der Spannung an der Primärwicklung korrespondiert. Alternativ kann dieser Anschluss ohmsch oder kapazitiv an eine Wicklung des Transformators angeschlossen werden.

Wie bereits erwähnt wird die sekundärseitige Stromflusszeitdauer als Regelgröße verwendet um die Ausgangsspannung des Schaltnetzteils zu regeln. Der Grenzwert für die Stromflusszeitdauer, der für den eigentlichen Regelkreis benötigt wird, wird definiert durch ein oder mehrere Schaltelemente die mit einem Rückkopplungseingang der Steuerschaltung verbunden sind.

Die Ausgangsspannung des Schaltnetzteils ist abhängig von mehreren Faktoren, wie unter anderen dem Spitzenwert des Stroms in der Sekundärwicklung, der Induktivität der Sekundärwicklung des Transformators und der sekundärseitigen Stromflusszeitdauer ist. Die dazugehörige Formel lautet:

$$t\_sek = L\_sek * I\_sek\_max / (V\_out + V\_d)$$

$$\text{mit} \quad I\_sek\_max = I\_prim\_max * Np/Ns$$

Da L_sek, Np, Ns und V_d konstant sind, ist die sekundärseitige Stromflusszeitdauer t_sek nur von I_prim_max und V_out abhängig. Um eine einfache, direkte Korrespondenz zwischen t_sek und V_out zu ermöglichen, kann der maximale, durch die Primärwicklung fließende, Strom I_prim_max bei jedem Ausschalten des primärseitigen Schalters gleich gehalten werden.

## KURZE BESCHREIBUNG DER ZEICHNUNGEN

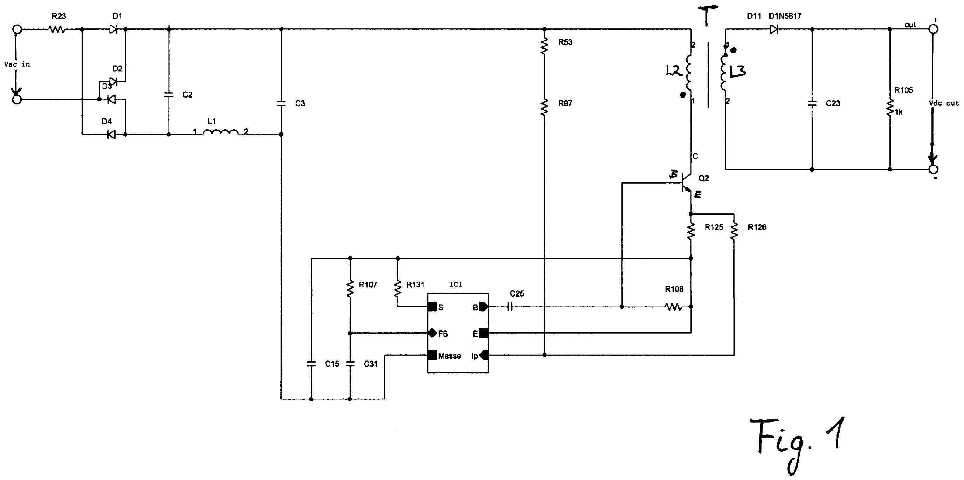

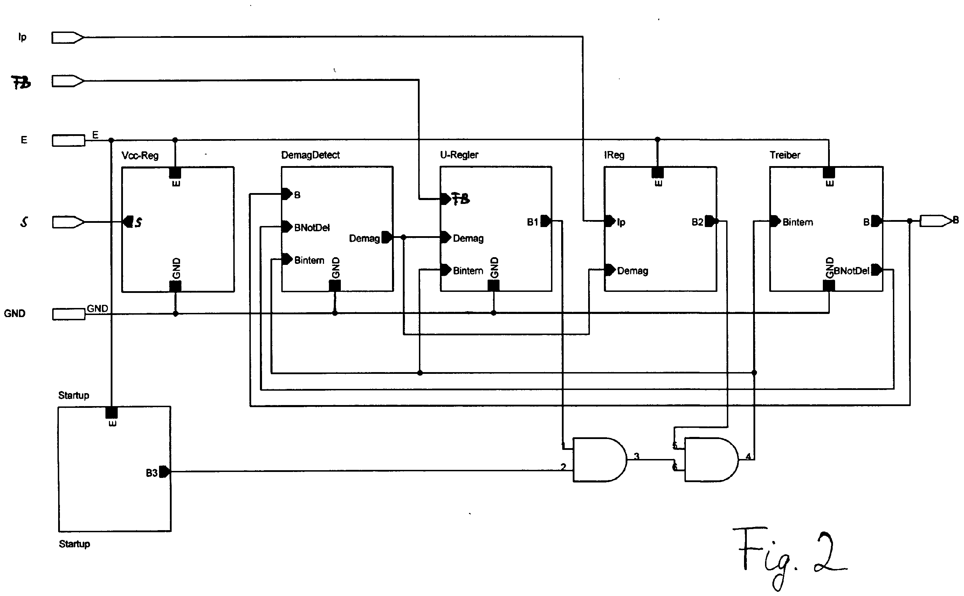

Anhand der in der beiliegenden Figuren 1 und 2 dargestellten Ausgestaltungen wird die Erfindung im Folgendem näher erläutert.

Figur 1    zeigt einen Schaltplan eines primär gesteuerten Schaltnetzteils mit einer Regelschaltung gemäß einer Ausführungsform der vorliegenden Erfindung.

Figur 2    zeigt einen Funktionsaufbau einer Regelschaltung in einen primäre gesteuerten Schaltnetzteil gemäß einer Ausführungsform der vorliegenden Erfindung.

## DETAILLIERTE BESCHREIBUNG

Im Folgenden wird anhand von Fig. 1 das Schaltnetzteil beschrieben.

Das Schaltnetzteil wird an seinem Eingang mit der Wechselspannung (Vac in) beaufschlagt. In Europa variiert die Netzspannung zwischen 180 V und 263 V Wechselspannung, in Amerika zwischen 90 V und 130 V. Mit Hilfe des Brückengleichrichters, bestehend aus den Dioden D1 bis D4, sowie der Kondensatoren C2, C3 und der Induktivität L1 wird die Eingangsspannung von Vac in gleichgerichtet und stabilisiert, und es wird sichergestellt, dass Störsignale, die im Schaltnetzteil erzeugt werden, nicht zu stark ins Wechselspannungsnetz gelangen.

Die primärseitige Wicklung L2 des als Transformator ausgebildeten Übertragers T und der primärseitige Schalter Q2 sind miteinander in Serie geschaltet. An dem Anschluss 2 der primärseitigen Wicklung L2 liegt die gleichgerichtete Eingangsspannung an. Der primärseitige Schalter Q2 unterbricht den Strom, der durch die primärseitige Wicklung L2 fließt, entsprechend dem Steuersignal B der Regelschaltung IC1.

Beispielsweise kann die Abschaltdauer des primärseitigen Schalters Q2 so eingestellt werden, dass die in den Transformator T eingespeiste Energie von der Ausgangsspannung Vdc out abhängig ist. Es wird also die übertragende Leistung so eingestellt, dass sich ein gewünschter Wert für die Ausgangsspannung Vdc out ergibt, wie im folgenden genauer erläutert werden soll.

Einer der zentralen Elemente des Schaltnetzteils ist der Übertrager, meistens als Transformator mit einer primärseitigen und einer sekundärseitigen Wicklung aufgebaut. Sperrwandler, die in dieser Erfindung beispielhaft angenommen werden, gehören zu den am meisten eingesetzten Schaltnetzteilarten. Allerdings ist es für einen Fachmann naheliegend die folgenden erfindungsgemäßen Prinzipien auf einige andere Arten von Schaltnetzteilen anzuwenden. Bei Sperrwandlern wird die Energie immer nur während der Sperrphase des Schalttransistors auf den Ausgang übertragen. Im Detail, während der Flußphase (der Schalter Q2 ist geschlossen) liegt die Eingangsspannung an der primärseitigen Wicklung L1 an, und ein linear ansteigender Strom fließt durch die Primärspule L1. Dabei wird die Energie der Eingangsspannungsquelle in die Primärspule übertragen, speziell in den Luftspalt des Trafos, da ein magnetisches Feld durch den Stromfluss aufgebaut wird. Die gespeicherte Energie in der primärseitigen Hauptwicklung hängt von der Stromstärke durch die Wicklung zum Ausschaltzeitpunkt ab. Je höher der Strom, umso größer ist die gespeicherte Energie, die anschließend auf die Sekundärseite übertragen wird.

Während der Flußphase erfolgt keine Energieübertragung an die Sekundärseite, da aufgrund der Polarität der Sekundärwicklung, die Diode auf der Sekundärseite sperrt und somit kein Strom durch die Sekundärseite fließen kann. Die Last muss während der Flußphase aus einem sekundärseitigen, der Sekundärwicklung parallel geschalteten, Kondensator mit Strom versorgt werden.

Wenn der Schalter Q2 nun geöffnet wird, beginnt die Sperrphase, während der der eigentliche Energieaustausch erfolgt. Durch das Öffnen des primärseitigen Schalters wechselt die Polarität an der Sekundärwicklung, da gemäß dem Induktionsgesetz die Spannungen an den Transformatoren umgepolt werden. Die Diode auf der Sekundärseite wird nun leitend, und auf der Sekundärseite beginnt ein stetig absinkender Strom zu fließen. Damit wird die im Transformator gespeicherte Energie an die Ausgangslast und den Ausgangskondensator abgegeben.

Die Regelschaltung, die hier als anwenderspezifische integrierte Schaltung (ASIC) ausgeführt ist, steuert den Treiberausgang B und somit die Ein- und Ausschaltzeiten des primärseitigen Schalters Q2. Sowohl die Steuerung der Frequenz als auch die Pulsbreite werden durch die Schalteransteuerung bestimmt. Dabei legt der Einschaltzeitpunkt die Dauer der Sperrphase und damit die Frequenz der Energieübertragung fest. Der Ausschaltzeitpunkt bestimmt die Stromflussdauer und damit die Pulsbreite, die mit der zu übertragenden Energie korrespondiert. Mit anderen Worten, durch den Einschaltzeitpunkt kann die Ausschaltdauer und damit die Taktfrequenz geregelt werden. Durch den Ausschaltzeitpunkt kann die Energiepulsbreite eingestellt werden, und damit die zu übertragende Energie in der primärseitigen Hauptwicklung.

Erfindungsgemäß weist das Schaltnetzteil keine Rückkopplung der Ausgangsspannung auf, d.h. keine direkte Verbindung zwischen der Sekundärseite und der Primärseite ist vorgesehen um ein der Ausgangsspannung entsprechendes Signal rückzukoppeln. Stattdessen wird die Stromflussdauer auf der Sekundärseite, nach dem Öffnen des Schalters Q2 als Regelgröße verwendet. Da diese Regelgröße auf der Primärseite ermittelt werden kann, ist keine direkte Rückkopplung von der Sekundärseite notwendig. Dies hat mehrere Vorteile, wie beispielsweise die geringeren Produktionskosten, da der Transformator keine Hilfswicklung haben muss, oder das Schaltnetzteil keinen Optokoppler verwenden muss. Die galvanische Trennung der Primär- und Sekundärseite ist durch den Transformator gegeben, und da keine Rückkopplung erforderlich ist, sind die Eingangs- und Ausgangsseite vollständig voneinander isoliert.

Im Folgenden wird erläutert, warum die sekundärseitige Stromflusszeitdauer verwendet werden kann, um die Ausgangsspannung des Schaltnetzteils zu regeln.

Bei einem Schaltnetzteil nach dem Sperrwandlerprinzip im diskontinuierlichen Betrieb berechnet sich die Dauer des Stromflusses nach dem Abschalten des primärseitigen Schalters näherungsweise wie folgt:

$$t\_sek = L\_sek * I\_sek\_max / (V\_out + V\_d)$$

mit

$$I\_sek\_max = I\_prim\_max * Np/Ns$$

wobei

t_sek = Dauer des Stromflusses auf der Sekundärseite nach dem Abschalten des Schalters Q2
L_sek = Induktivität der Sekundärwicklung der Transformators
I_sek max = Spitzenwert des Stromes in der Sekundärwicklung
V_out = Ausgangsspannung
V_d = Flussspannung der Gleichrichterdiode auf der Sekundärseite
Iprim max = Spitzenwert des Stromes in der Primärwicklung
Np = Anzahl der Windungen der Primärwicklung
Ns = Anzahl der Windungen der Sekundärwicklung

Da L_sek, Np, Ns und V_d konstant bzw. näherungsweise konstant sind, ist t_sek nur von I_prim_max und V_out abhängig. I_prim_max kann auf der Primärseite gemessen und kontrolliert werden. Somit kann durch Bestimmung der sekundärseitigen Stromflusszeit nach dem Abschalten des Schalters indirekt die Höhe der Ausgangsspannung ermittelt werden. Am einfachsten ist dies wenn vorteilhafterweise bei jedem Puls der gleiche maximale Primärstrom I_prim_max eingeprägt wird. In diesem Fall entspricht jede Zeitdauer t_sek genau einer Ausgangsspannung. Folglich ist es möglich die Ausgangsspannung zu regeln indem t_sek geregelt wird.

Für die Regelung anhand von t_sek ist noch ein Grenzwert für die sekundärseitige Stromflusszeitdauer notwendig, mit dessen Hilfe ein geschlossener Regelkreis gebildet werden kann.

Zu diesem Zweck ist als Ausführungsbeispiel ein RC-Glied, bestehend aus dem Widerstand R107 und dem Kondesator C31, mit dem Rückkopplungseingang FB der Steuerschaltung IC1 verbunden. Der Kondensator C31 wird während der Flussphase über den Pin FB in den IC1 entladen. Wenn der primärseitige Schalter Q2 geöffnet wird, wird der Kondensator C31 über den Widerstand R107 durch die an dem Widerstand R107 anliegende Versorgungsspannung geladen, und stellt somit einen zeitlichen Wert für die Steuerschaltung bereit. Die Spannung an Pin FB von IC1 wird dazu mit einer in IC1 gebildeten Referenzspannung verglichen. Der zeitlich Wert ist erreicht wenn die Spannung an FB gleich dieser Referenzspannung ist.

Gemäß der vorher angegebenen Formel korrespondiert eine hohe Ausgangsspannung V_out mit einem niedrigen t_sek-Wert, und eine niedrige Ausgangsspannung mit einer langen sekundärseitigen Stromflusszeitdauer.

Wenn die ermittelte sekundärseitige Stromflusszeitdauer t_sek den oben definierten Grenzwert (siehe C31 und R107) unterschreitet, ist die Eingangsspannung zu hoch, und folglich muss mit den nächsten Pulsen weniger Energie von der Primärseite an die Sekundärseite übertragen werden.

Um dies zu erreichen kann beispielsweise beim Sperrwandler der Einschaltzeitpunkt des primärseitigen Schalters verzögert werden, wodurch die Taktfrequenz der Energieübertragung erniedrigt wird (die Energie pro Puls bleibt dabei in vorteilhafter Weise gleich, wodurch nur anhand der Taktfrequenz die übertragene Energie pro Zeit geändert werden kann). Durch das spätere Schließen des Schalters Q2 wird weniger Energie übertragen und die Ausgangsspannung sinkt. Alternativ kann auch die Abschaltschwelle für den Primärstrom verringert werden, sodass weniger Energie pro Puls übertragen wird. Dann muss allerdings auch die zeitliche Referenz angepasst werden, z.B. durch Anpassung der Referenzspannung.

Wenn die sekundärseitige Stromflusszeitdauer über dem Grenzwert liegt, ist die Ausgangsspannung zu niedrig, und mehr Energie muss auf die Sekundärseite übertragen werden. Die Taktfrequenz der Energieübertragung muss erhöht werden, und somit wird der primärseitige Schalter früher wieder geschlossen.

Wie oben erläutert ergibt sich somit ein geschlossener Regelkreis, der die Ausgangsspannung (und/oder den Ausgangsstrom) auf einem gewünschten Wert regeln kann.

Im Folgenden soll erläutert werden wie gemäß der Erfindung die Stromflussdauer, in welcher ein Strom durch die Sekundärseite fließt, ermittelt werden kann.

Der Beginn der sekundärseitigen Stromflusszeitdauer t_sek korrespondiert mit dem Ausschaltzeitpunkt des primärseitigen Schalters, da erst beim Ausschalten des Schalters Q2 die Diode D11 auf der Sekundärseite leitend wird und damit einen Stromfluss auf der Sekundärseite ermöglicht.

Wie bereits erwähnt, wird das Ende der Stromflusszeitdauer anhand der Spannung an der Primärwicklung ermittelt. Im Detail, wenn die Primärwicklungsspannung auf Null absinkt, ist die Sekundärspannung aufgrund der magnetischen Kopplung ebenfalls auf Null, und somit fließt auf der Sekundärseite kein Strom mehr durch die Sekundärwicklung.

Gemäß einer vorteilhaften Ausführungsform, wird diese Primärwicklungsspannung durch Messen der Spannung am Basiseingang des primärseitigen Schalters Q2 ermittelt. Dazu wird die parasitäre Kapazität des Schalters ausgenutzt. Da die Spannung an der Primärwicklung des Transformators in der Regel sehr hoch ist, wird auch über kleine Kapazitäten genug Energie übertragen um daran den Verlauf der Spannung zu erfassen. So ist es zum Beispiel möglich bei Verwendung eines Bipolartransistors als Schalter die Spannung an der Basis, oder bei Verwendung eines FET die Spannung am Gate, dafür zu nutzen. Dann kann an der Basis, bzw. am Gate, der Verlauf der Spannung am Transformator erkannt werden, da die Spannung über die Kollektor-Basis- bzw. Drain-Gate-Kapazität (Millerkapazität) auf die Basis bzw. das Gate gekoppelt wird.

Um diese Kopplung zwischen der Spannung am Kollektor und der resultierenden Spannung an der Basis zu verbessern, kann der Schalter relativ hochohmig im ausgeschalteten Zustand gehalten werden. Der Ausschaltvorgang muss schnell erfolgen daher wird der Schalter zunächst niederohmig angesteuert. Nachdem der Ausschaltvorgang abgeschlossen ist, reicht es jedoch aus den Schalter hochohmig anzusteuern um den Schalter im offenen Zustand zu halten. Durch die hochohmige Ansteuerung erhöht sich die durch die parasitäre Kapazität übertrage Spannung an der Basis des Schalters, die somit besser gemessen werden kann.

Anstatt die Primärwicklungsspannung über die Spannung am Basiseingang des Schalters zu ermitteln, können auch parasitäre Kapazitäten zwischen Leiterbahnen auf diese Weise genutzt werden. Beispielsweise kann an einem Eingangspin der Steuerschaltung eine Leiterbahn angeschlossen werden, die kapazitiv an die Leiterbahn zwischen Pin C von Q2 und Pin 1 von L2 gekoppelt ist (z.B. parallele Leiterbahnführung). So entsteht an dem Eingangspin ein Abbild der Spannung an Pin 1 von L2. Da hier nicht das Steuersignal von Pin B überlagert ist, ist es bei dieser Ausführungsform einfacher die Stromflusszeitdauer zu erfassen.

Auf die oben beschriebene Weise ist es möglich die sekundärseitige Stromflusszeitdauer auf der Primärseite zu messen, und damit die Ausgangsspannung des Schaltnetzteils zu regeln, ohne dass eine Hilfswicklung am Transformator oder ein Optokoppler (oder ähnliches) erforderlich ist.

Der Versorgungsspannungsanschluss E der Regelschaltung IC1 ist über den Widerstand R125 mit dem Emitter des primärseitigen Schalters verbunden, so dass die Versorgungsspannung unmittelbar aus dem durch den Schalter Q2 fließenden primärseitigen Strom gewonnen werden kann.

Um überschüssigen Strom ableiten zu können, ist hierzu parallel geschaltet ein Abzweigwiderstand R131, der über den Schaltanschluss S mit einem im IC1 angeordneten Schalter so verbunden ist, dass der überschüssige Strom parallel zur Betriebsspannung abgeleitet werden kann. Intern sind in dem ASIC IC1 Vergleichsmittel enthalten, die überwachen, ob die Betriebsspannung außerhalb eines definierten Wertes liegt, z. B. 3 V oder 5 V. Wenn die Betriebsspannung diesen Schwellenwert überschreitet, wird der interne Schalter eingeschaltet, und der überschüssige Strom wird durch den Widerstand R131 und über Masse parallel zur Betriebsspannung des ICs abgeleitet. Dabei wird die meiste Verlustleistung nicht in dem ASIC IC1 generiert, sondern in dem Abzweigwiderstand R131, so dass die Temperaturerhöhung, die möglicherweise kritisch sein könnte, außerhalb des ASIC entsteht. Auf diese Weise kann erreicht werden, dass mit einem preiswerten Bauelement, nämlich einem Widerstand, die Betriebsspannung der Steuerschaltung begrenzt werden kann.

Als primärseitiger Schalter Q2 ist in der vorliegenden Ausführungsform ein Leistungsbipolartransistor vorgesehen. Selbstverständlich können alle gebräuchlichen Halbleiterleistungsschalter verwendet werden, also Bipolartransistoren, Feldeffekttransistoren oder Insulated-Gate Bipolartransistoren (IGBT).

Da das höchste Potential der Steuerschaltung niedriger ist als das zum Einschalten des Transistors Q2 erforderliche Potential, ist zwischen dem Steueranschluss von Schalter Q2 und dem Treiberausgang B des ASIC ein Kondensator C25 vorgesehen. Ein Anschluss dieses Kondensators wird mit dem Widerstand R108 an das Betriebsspannungspotential der Steuerschaltung, also an den Anschluss E des ASIC IC1 angeschlossen, sodass beim Umschalten des Treiberausgangs B der Steuerschaltung Spannungen oberhalb der Betriebsspannung erreicht werden können. Somit kann der Leistungsschalter Q2 sicher ein- und ausgeschaltet werden, obwohl die eigentliche Betriebsspannung unter den erforderlichen Werten liegen würde.

Um den Maximalstrom im Transformator T begrenzen zu können, ist zwischen die Steuerschaltung und dem Ausgang des Leistungsschalters Q2, also den Emitteranschluss E, bzw. im Fall eines FET den Sourceanschluss, ein Widerstand R125 geschaltet. Der Spannungsfall an diesem Widerstand ist über einen weiteren Widerstand R126 an den Spitzenstromerkennungsanschluss Ip der Steuerschaltung geführt. Anhand des Spannungsfalls an dem Spitzenstromerkennungsanschluss Ip wird durch die Steuerschaltung IC1 der Zeitpunkt bestimmt, zu dem der Leistungsschalter Q2 ausgeschaltet werden muss.

Der sechste Anschluss des erfindungsgemäßen ASIC ist ein Masseanschluss GND und ist mit Masse verbunden.

Für den Start benötigt die Steuerschaltung IC1 einen kleinen Strom. Bei dem hier dargestellten Schaltnetzteil erfolgt dies über zwei Starterwiderstände R53 und R97, die mit der gleichgerichteten Eingangsspannung des Schaltnetzteils verbunden sind. Der zweite Anschluss des Starterwiderstands R97 wird nicht unmittelbar mit dem Betriebsspannungseingang E der Regelschaltung verbunden, sondern mit deren Anschluss Ip zur Begrenzung des Maximalstroms. Durch eine geeignete Dimensionierung der Widerstände an diesem Anschluss, nämlich dem Starterwiderstände R53 und R97 und dem Widerstand R126, kann eine Variation des Abschaltstroms, die durch die Abschaltverzögerung des Leistungsschalters Q2 bei einer Variation der Eingangsspannung entsteht, kompensiert werden.

Fig. 2 zeigt den internen funktionellen Aufbau der Steuerschaltung IC1 gemäß einer beispielhaften Ausführungsform der Erfindung. Die Steuerschaltung unterteilt sich in sechs Untergruppen, deren Funktionen im Folgenden näher erläutert werden sollen.

Der Vcc-Regler (Vcc-Reg) ist mit dem Pins S, E und GND (Masse) verbunden, und hat die Aufgabe die Spannung am Pin E konstant zu halten. Wie bereits beschrieben, wird bei einer zu hohen Betriebsspannung überschüssiger Strom über den Widerstand R131 und dem Pin S abgeleitet. Dazu wird der, über den Pin S einfließende, Strom innerhalb des Vcc-Reglers an Masse weitergeleitet, solange bis die Betriebsspannung wieder auf den korrekten Wert (bsp. 5V) abgesunken ist.

Der Demagnetisierungsdetektor (DemagDetect) hat festzustellen wann die Primärwicklung demagnetisiert ist, d.h. wann keine Spannung mehr an der Primärwicklung anliegt. Dazu ist der Detektor mit den Pins B, BNotDel und Bintern verbunden, und gibt am Pin Demag ein entsprechendes Ausgangssignal aus. Am Pin B kann der Demagnetisierungsdetektor den Spannungsverlauf am Steuereingang des Schalters Q2 ermitteln. Dies erfolgt nur während der Schalter Q2 im offenen Zustand ist, was der Detektor anhand eines entsprechendem Signales am Pin Bintern erkennt. Der Pin BNotDel verzögert die Messung der Spannung am Pin B bis der Ausschaltvorgang des primärseitigen Schalters komplett abgeschlossen ist. Wenn ein Nulldurchgang der Spannung am Pin B (also der Spannung an der Basis des Transistors Q2) festgestellt wird, gibt der Demagnetisierungsdetektor ein entsprechendes Signal über den Pin Demag aus.

Der Spannungsregler (U-Regler) hat drei Eingänge FB, Demag und Bintern um damit ein Ausgangssignal B1 bereitzustellen mit deren Hilfe der Treiber (wird später beschrieben) den primärseitigen Schalter ansteuert. Innerhalb des Spannungsreglers wird die sekundärseitige Stromflusszeitdauer ermittelt und mit einem Grenzwert verglichen. Über den Pin Bintern kann der Spannungsregler ermitteln wann der Strom auf der Sekundärseite zu fließen beginnt; nämlich wenn der primärseitige Schalter Q2 ausgeschaltet wird. Das Ende der Stromflusszeitdauer wird über den Pin Demag und dessen Signal definiert, das von dem Demagnitisierungsdetektor erzeugt wird. Die so ermittelte Zeitdauer wird mit einem Grenzwert verglichen, der mit Hilfe des Signals am Pin FB festgesetzt wird. Je nach dem ob die sekundärseitige Stromflusszeitdauer diesen Grenzwert unterschreitet oder nicht, wird der Ausgang B1 des Spannungsreglers mit einem Signal beaufschlagt. Hauptsächlich regelt der Ausgangsregler den Einschaltzeitpunkt des Schalters Q2.

Der Stromregler (IReg) ist hauptsächlich dazu da den Ausschaltzeitpunkt des primärseitigen Schalters zu bestimmen. Dazu werden die Eingänge Ip und Demag verwendet. Wie schon beschrieben, wird der Spannungsfall an Widerstand R125 über einen weiteren Widerstand R126 an den Spitzenstromerkennungsanschluss Ip der Steuerschaltung geführt. Anhand des Spannungsfalls an dem Spitzenstromerkennungsanschluss Ip kann der Stromregler den Zeitpunkt bestimmen, zu dem der Leistungsschalter Q2 ausgeschaltet werden muss. Vorteilshafterweise kann der Ausschaltzeitpunkt so gewählt werden, dass bei jedem Puls der gleiche maximale Strom eingeprägt wird. Mit Hilfe des Demag-Signals kann die Stromflussdauer in der Sekundärwicklung bestimmt werden. Damit wird der früheste Zeitpunkt festgelegt zu dem Q2 eingeschaltet werden darf. In bekannter Weise kann so der Ausgangsstrom begrenzt werden. In der einfachsten Ausführungsform wird Q2 frühestens dann wieder eingeschaltet wenn der Stromfluss in der Sekundärwicklung beendet ist. Dies führt zum sogenannten quasiresonanten Modus solange die Ausgangsspannung kleiner als die Regelspannung ist. Dadurch nimmt der Ausgangsstrom mit sinkender Ausgangsspannung zu. Alternativ ist auch die Einstellung eines konstanten Tastverhältnisses des Stromes in der Sekundärwicklung möglich, wodurch eine ausgangsspannungsunabhängige Strombegrenzung erreicht wird.

Der Treiber ist dafür zuständig aus einem eingegeben Signal Bintern, das sich aus einer Kombination der Ausgänge B1, B2 und B3 ergibt, ein entsprechendes Steuersignal B für den primärseitigen Schalter zu erzeugen. Der Treiber ist zusätzlich dafür zuständig, den Schalter hochohmig anzusteuern um diesen im ausgeschalteten Zustand zu halten. Das Signal BNotDel wird von dem Treiber ausgegeben um den Demagnitisierungsdetektor zu signalisieren wann der Ausschaltvorgang des Schalters abgeschlossen ist, damit dieser mit der Erkennung der Demagnetisierung der Primärwicklung beginnen kann.

Die Startup-Komponente der Steuerschaltung wird nur beim Einschalten des Schaltnetzteils verwendet.

Zwar wurde bisher davon ausgegangen, dass die erfindungsgemäße Steuerschaltung für die Regelung der Ausgangsspannung des Schaltnetzteils verwendet wird. Allerdings beschränkt sich der Einsatz des erfindungsgemäßen Prinzips nicht darauf. Beispielsweise kann die erfindungsgemäße Ermittelung der Ausgangsspannung über die sekundärseitige Stromflusszeitdauer auch für einen Überspannungsschutz (Overvoltage Protection, OVP) verwendet werden.

Bei einem Schaltnetzteil muss sichergestellt werden, dass im Falle eines fehlerhaften Anschliessens der Hilfswicklung oder eines Drahtbruchs die Ausgangsspannung des Schaltnetzteils durch geeignete Massnahmen auf einem sicheren Level begrenzt wird. Üblicherweise geschieht dies durch einen weiteren Regelkreis. Nachteilig an diesen bekannten Verfahren ist, dass in der Regel zusätzlich Bauteile erforderlich sind, die die Schaltung unnötig komplex und teuer machen.

Das Schaltnetzteil gemäß einer weiteren Ausführungsform der Erfindung weist eine an sich übliche Regelung der Ausgangsspannung mit Hilfe einer Rückkopplung durch eine Hilfswicklung oder einen Optokoppler auf. Mit anderen Worten, die Regelung erfolgt nicht wie oben beschrieben basierend auf der sekundärseitigen Stromflusszeitdauer, sondern basierend auf einem Rückkopplungssignals das der Ausgangsspannung entspricht und beispielsweise über eine Hilfswicklung am Übertrager an die Primärseite rückgeführt wird. Die erfindungsgemäße Regelschaltung weist neben den für die eigentliche Ausgangsspannungsregelung notwendigen Funktionen, weiterhin eine Überspannungsschutzfunktion auf. Die Ausgangsspannung wird mit Hilfe der sekundärseitigen Stromflusszeitdauer überwacht, die wie oben beschrieben ermittelt werden kann. Es wird wieder ein Grenzwert definiert, der von der Stromflusszeitdauer nicht unterschritten werden sollte, wobei der Grenzwert einer Ausgangsspannung entspricht, die nicht von dem Schaltnetzteil überschritten werden soll. Um nun den Überspannungsschutz zu realisieren, kann der primärseitige Schalter für einige Zeit oder dauerhaft ausgeschaltet werden, wenn der Grenzwert von der ermittelten sekundärseitigen Stromflusszeitdauer unterschritten wird. Es wird dann keine Energie mehr an die Sekundärseite übertragen, und die Ausgangsspannung sinkt.

Wenn eine Rückkopplung in dem Schaltnetzteil vorhanden ist (bsp. Wenn ein OVP mit der Erfindung realisiert wird), kann das Ende der sekundärseitigen Stromflusszeitdauer auch mit Hilfe des Rückkopplungssignals ermittelt werden, anstatt die Spannung an der Primärwicklung zu verwenden. Beispielsweise können an sich bekannte Verfahren einer Demagnitisierungserkennung an der Hilfswicklung dafür Anwendung finden.

Die erfindungsgemäße Steuerschaltung ermöglicht es, ein Schaltnetzteil anzugeben, bei dem - im Gegensatz zu den bekannten Verfahren, bei denen eine Hilfswicklung oder ein Optokoppler verwendet werden, um die Ausgangsspannung von der Sekundärseite auf die Primärseite zurückzukoppeln - Kosten gespart werden können.

## Patentansprüche

1. Steuerschaltung für ein primärgesteuertes Schaltnetzteil, umfassend einen primärseitigen Schalter (Q2) sowie einen Übertrager (T), der eine primärseitige (L2) und eine sekundärseitige Wicklung (L3) aufweist, wobei der primärseitige Schalter (Q2) ausgestaltet ist, einen Strom durch die primärseitige Wicklung zu schalten, und wobei die Steuerschaltung mit einem Steuereingang des primärseitigen Schalters verbunden ist und derart ausgestaltet ist, den primärseitigen Schalter basierend auf einer sekundärseitigen Stromflusszeitdauer, in welcher ein Strom durch die sekundärseitige Wicklung des Übertragers fließt, anzusteuern, um die Ausgangsspannung des Schaltnetzteils zu regeln, **dadurch gekennzeichnet, dass** die Steuerschaltung weiterhin ausgestaltet ist, die sekundärseitige Stromflusszeitdauer als Regelgröße mit einer Referenzzeit zu vergleichen, um die Ausgangsspannung durch Einschalten und Ausschalten des primärseitigen Schalters zu regeln.

2. Steuerschaltung nach Anspruch 1, wobei der Einschaltzeitpunkt des primärseitigen Schalters basierend auf der sekundärseitigen Stromflusszeitdauer bestimmt wird.

3. Steuerschaltung nach mindestens einem der vorherigen Ansprüche, wobei die sekundärseitige Stromflusszeitdauer mit dem Ausschaltzeitpunkt des primärseitigen Schalters beginnt.

4. Steuerschaltung nach mindestens einem der vorherigen Ansprüche, wobei das Ende der sekundärseitigen Stromflusszeitdauer durch den Nulldurchgang der Spannung an der primärseitigen Wicklung definiert wird.

5. Steuerschaltung nach Anspruch 4, wobei die Spannung an der primärseitigen Wicklung durch Messen der Spannung am Steuereingang des primärseitigen Schalters ermittelt wird.

6. Steuerschaltung nach Anspruch 5, wobei die Spannung am Steuereingang (B) des primärseitigen Schalters über einen Steuerausgang (B) der Steuerschaltung an die Steuerschaltung zurückgeführt wird.

7. Steuerschaltung nach einem der vorherigen Ansprüche, wobei mindestens ein Schaltelement (R107, C31) mit einem Rückkopplungseingang (FB) der Steuerschaltung verbunden ist, um einen Grenzwert für die Stromflusszeitdauer zu definieren.

8. Steuerschaltung nach einem der vorherigen Ansprüche, wobei die Steuerschaltung den primärseitigen Schalter hochohmig im ausgeschalteten Zustand hält.

9. Steuerschaltung nach einem der vorherigen Ansprüche, wobei der primärseitige Schalter so ausgeschaltet wird, dass der maximale Strom, der durch die primärseitige Wicklung fließt, bei jedem Ausschalten des primärseitigen Schalters gleich ist.

10. Schaltnetzteil mit einer Steuerschaltung nach mindestens einem der Ansprüche 1 bis 9.

11. Schaltnetzteil nach Anspruch 10, wobei die Steuerschaltung als Überspannungsschutz für das Schaltnetzteil implementiert ist.

**12.** Schaltnetzteil nach Anspruch 10 oder 11, wobei der primärseitige Schalter einen Bipolartransistor, einen Feldeffekttransistor oder einen Insulated Gate Bipolartransistor, IGBT, umfasst.

**Claims**

**1.** Control circuit for a primary controlled switched-mode power supply, comprising a primary-side switch (Q2) and a transformer (T) which comprises a primary-side (L2) and a secondary-side winding (L3), wherein the primary-side switch (Q2) is configured to switch a current through the primary-side winding and wherein the control circuit is connected to a control input of the primary-side switch and configured to control the primary-side switch based on a secondary-side current flow time period in which a current flows through the secondary-side winding of the transformer, in order to regulate the output voltage of the switched-mode power supply,
**characterized in that**
the control circuit is further configured to compare the secondary-side current flow time period as a control parameter with a reference time to regulate the output voltage by switching on and off the primary-side switch.

**2.** Control circuit according to claim 1, wherein the switch-on time of the primary-side switch is defined based on the secondary-side current flow time period.

**3.** Control circuit according to at least one of the previous claims, wherein the secondary-side current flow time period begins with the switch-off time of the primary-side switch.

**4.** Control circuit according to at least one of the previous claims, wherein the end of the secondary-side current flow time period is defined by the zero crossing of the voltage on the primary-side winding.

**5.** Control circuit according to claim 4, wherein the voltage on the primary-side winding is determined by measuring the voltage on the control input of the primary-side switch.

**6.** Control circuit according to claim 5, wherein the voltage at the control input (B) of the primary-side switch is fed back via a control output (B) of the control circuit to the control circuit.

**7.** Control circuit according to any one of the previous claims, wherein at least one switching element (R107, C31) is connected to a feedback input (FB) of the control circuit, in order to define a limiting value for the current flow time period.

**8.** Control circuit according to any one of the previous claims, wherein the control circuit keeps the primary-side switch with high impedance in the switched-off state.

**9.** Control circuit according to any one of the previous claims, wherein the primary-side switch is switched off so that the maximum current flowing through the primary-side winding is equal for each switching off of the primary-side switch.

**10.** Switched-mode power supply with a control circuit according to at least one of claims 1 to 9.

**11.** Switched-mode power supply according to claim 10, wherein the control circuit is implemented as overvoltage protection for the switched-mode power supply.

**12.** Switched-mode power supply according to claim 10 or 11, wherein the primary-side switch comprises a bipolar transistor, a field-effect transistor, or an insulated gate bipolar transistor (IGBT).

**Revendications**

**1.** Circuit de commande pour un bloc d'alimentation à découpage à commande primaire, comprenant un commutateur primaire (Q2) ainsi qu'un transformateur (T), qui présente un enroulement primaire (L2) et un enroulement secondaire (L3), le commutateur primaire (Q2) étant conçu pour commuter un courant à travers l'enroulement primaire, et le circuit de commande étant relié à une entrée de commande du commutateur primaire et étant conçu pour assurer une commande du commutateur primaire en se basant sur une durée de continuité du flux de courant secondaire pendant laquelle un courant circule à travers l'enroulement secondaire du transformateur, en vue de réguler la tension de sortie du bloc d'alimentation à découpage,

**caractérisé en ce que** le circuit de commande est, en outre, conçu pour comparer la durée de continuité du flux de courant secondaire en tant que grandeur de régulation avec un temps de référence, en vue de réguler la tension de sortie par fermeture et ouverture du commutateur primaire.

2. Circuit de commande selon la revendication 1, dans lequel l'instant de fermeture du commutateur primaire est déterminé en se basant sur la durée de continuité du flux de courant secondaire.

3. Circuit de commande selon l'une au moins des revendications précédentes, dans lequel la durée de continuité du flux de courant secondaire débute avec l'instant d'ouverture du commutateur primaire.

4. Circuit de commande selon l'une au moins des revendications précédentes, dans lequel la fin de la durée de continuité du flux de courant secondaire est définie par le passage par zéro de la tension à l'enroulement primaire.

5. Circuit de commande selon la revendication 4, dans lequel la tension à l'enroulement primaire est déterminée par mesure de la tension à l'entrée de commande du commutateur primaire.

6. Circuit de commande selon la revendication 5, dans lequel la tension à l'entrée de commande (B) du commutateur primaire est ramenée au circuit de commande par l'intermédiaire d'une sortie de commande (B) du circuit de commande.

7. Circuit de commande selon l'une des revendications précédentes, dans lequel au moins un composant de circuit (R107, C31) est relié à une entrée de rétroaction (FB) du circuit de commande, en vue de définir une valeur limite pour la durée de continuité du flux de courant.

8. Circuit de commande selon l'une des revendications précédentes, dans lequel le circuit de commande maintient le commutateur primaire à une impédance élevée dans l'état ouvert.

9. Circuit de commande selon l'une des revendications précédentes, dans lequel le commutateur primaire est commuté dans l'état ouvert de manière telle, que le courant maximal, qui s'écoule à travers l'enroulement primaire, soit identique à chaque ouverture du commutateur primaire.

10. Bloc d'alimentation à découpage comprenant un circuit de commande selon l'une au moins des revendications 1 à 9.

11. Bloc d'alimentation à découpage selon la revendication 10, dans lequel le circuit de commande est implémenté en tant que protection contre les surtensions pour le bloc d'alimentation à découpage.

12. Bloc d'alimentation à découpage selon la revendication 10 ou la revendication 11, dans lequel le commutateur primaire comprend un transistor bipolaire, un transistor à effet de champ ou un transistor bipolaire à grille isolée IGBT (de *Insulated Gate Bipolar Transisor*).

Fig. 1

Fig. 2

**IN DER BESCHREIBUNG AUFGEFÜHRTE DOKUMENTE**

**In der Beschreibung aufgeführte Patentdokumente**

- US 20070103943 A1